# EUROPEAN PATENT APPLICATION

(11) **EP 0 818 147 A1**
(43) Date of publication of application: **14.01.1998**
(21) Application number: 97305137.8
(22) Date of filing: 11.07.1997
(51) Int. Cl.: A21C 11/08, A21C 11/02

(54) **Improvements relating to biscuit making**

(30) Priority: 12.07.1996 GB 9614683
(71) Applicant: Hill, Brian Derek, Sutton Coldfield, Birmingham B75 6AJ (GB)
(72) Inventor: Hill, Brian Derek, Sutton Coldfield, Birmingham B75 6AJ (GB)
(74) Representative: Lawrence, John

(57) **Abstract**

A biscuit roller (2) is made of a number of axially aligned adjacent sections, each of which having a support member (16), a plastic mould-defining member (28), and a wear resistant member (20). The mould-forming member (20) is thick enough so as to prevent the migration of metal contaminants from the support member (16) reaching the surface which contacts, in use, the biscuit dough. This avoids wear of the mould-defining member contaminating biscuits with plastic that contains heavy metal contaminants. The modular construction of the roller assists in reducing the cost of, and time of, maintenance of the roller, and is claimed as a separate invention.

It is recommended that Figure 3 accompany the abstract when it is published.

## Description

This invention relates to providing an improved apparatus for manufacturing biscuits and also an improved method for maintaining biscuit manufacturing apparatus.

Biscuit manufacturing apparatus is well known; biscuits are widely consumed in the United Kingdom and the rest of the world and thus the technology is well known.

Prior art systems suffer from a number of disadvantages which will be discussed hereinafter. One kind of traditional biscuit manufacturing machine comprises a first roller carrying a number of biscuit moulds and a second roller co-operating with the first roller to urge a quantity of biscuit dough into the moulds. Biscuits are formed by biscuit dough in the moulds which is extracted and fed into an oven.

It will be appreciated by a person skilled in the art that the moulds must be hard wearing and yet have an easy release surface to allow the biscuit dough to be ejected relatively easily and not have it stick to the mould too much. The moulds are an integral part of the roller and the whole assembly is traditionally fabricated from phosphor or leaded bronze.

Coating techniques (such as the patented zylon 8840 technique) coat the moulds in low friction coverings such as PTFE. Such coatings are designed to increase the ease with which biscuit dough can be ejected from the mould.

A machine with rollers/moulds described hereinbefore suffers from disadvantages: Phosphor bronze contains poisonous metals: copper 83%, zinc 7%, tin 3%, lead 7%). Other compositions of biscuit roller are also known which have higher percentages of lead.

Some of the metals in phosphor bronze have low melting points (copper 1083°C, zinc 215°C, tin 110°C, lead 166°C). Usually the metals would be held within the metal body of the roller; the operating temperatures encountered by the roller of a biscuit making machine are well below such melting points. However, processes such as the zylon 8840 expose the rollers/moulds to temperatures well in excess of the melting points.

The zylon 8840 process involves shot blasting the roller/mould to produce a surface which is keyed to allow a coating to adhere. A powered PTFE coating a few microns thick is applied to the keyed surface. The roller/mould is then heated to approximately 400°C to cause the PTFE coating to adhere to the roller/mould. This temperature is well in excess of the melting points of some of the constituents of the roller/mould. Tin, Zinc and lead may migrate into the PTFE coating.

As the roller/mould is used the PTFE coating is worn away and eventually needs replacing. Therefore PTFE together with quantities of zinc, tin and lead which have leached from the roller/mould during the heat treatment process will be present in the biscuits produced by the roller/mould.

It is the biscuit dough which abrades the PTFE coating. This abrasion problem is especially apparent with biscuit dough which contains a high sugar content or a high oat content (such as in Gingernut or Oatmeal type biscuits). Doughs such as these can remove the PTFE coating in as little as a day (and therefore such "easy release" coatings are not usually used with abrasive biscuit doughs).

Although the PTFE coating provides a surface which is low friction and allows the biscuit dough to be easily removed from the roller/mould the biscuit dough can be contaminated with undesirable components.

The present invention aims to provide a roller/mould for forming biscuits which ameliorates at least some of the problems of the prior art.

According to a first aspect of the invention we provide a biscuit making roller comprising a support member and a mould-defining member, the mould defining member being supported by the support member and having an outer surface which has moulds which, in use, form biscuits.

Preferably the support member is made of aluminium, or another light weight, but strong, material, eg a metal alloy.

Preferably the mould-defining member is made of a plastics material.

Preferably the roller further comprises a wear resistant member adapted in use to co-operate with a scraper blade of a biscuit making machine.

A roller in accordance with the first aspect of the invention has the advantages that the material of the mould-defining member may be chosen to provide a low friction, hygienic surface. Because the mould-defining member has a depth of more than a few microns any undesirable metal traces that may migrate into it are not near the surface of the mould defining member, and are less likely to contaminate the biscuits. (This is how thick a "significant thickness" is: thick enough so that metal traces, do not, in use, migrate to the biscuit - contacting surface of the mould-defining member). Also, the whole roller may be made lightweight by proper selection of the first material. Of course, the material of the mould-defining member should have no substances or particulate contents that are detrimental to health, so as to avoid problems with wear of the member contaminating biscuits with particularly undesirable materials (contamination with plastic is not exactly desirable, but unavoidable: contamination with heavy metals is avoidable using the present invention.

An advantage of using a metal for the support member of the roller is that metals are strong and so can withstand the forces applied during the biscuit rolling procedure. If an all plastics roller can be made strong enough to work properly we do want protection for that. The support member and mould defining member may be integrally moulded.

Aluminium is advantageous as a material for the support member because it is very light for its strength and is easy to machine when compared with other metals. Good machineability is advantageous because it allows the surface of the roller to be correctly finished before the moulds are provided on its surface.

The use of a plastics material for the mould-defining member is advantageous because plastics materials are generally lightweight (thus keeping down the mass of the roller), are easy to process (and thus it may be easy to form the mould) and are relatively hygienic (thus any mould formed will generally be safe for moulding biscuit dough).

The plastics material may be an acetal plastic. Such plastics have been found to exhibit properties making them suitable. Of course other types of plastic may also be suitable. The material would be suitable for use in contacting food. The plastic for the mould-defining member may be delrin 500™ which is manufactured by DuPont.

The use of a hard wear resistant material to form the, or each, wear resistant member is desirable because it protects the softer material of the mould-defining member from excessive wear.

Most preferably the or each wear resistant member is made of metal, such as stainless steel. This is advantageous because it is hard and is suitable for using in food making environments. Alternatively the material of the wear resistant member may be a ceramic material.

The wear resistant member may comprise a cylinder. It may be formed from a sheet of material formed into a thin walled cylinder. This may provide a convenient way of providing the wear surface of the wear resistant member.

At least one hole may be punched into the sheet used to form the wear resistant member. Such a hole may provide access to a mould on the outer surface of the mould defining member.

Preferably the sheet used to provide the wear resistant member is secured to the roller. This may effectively provide a one piece roller.

Preferably moulds provided on the outer surface of the mould defining member are provided between the sheet providing the wear resistant member and the support member. This has the advantage of locating the moulds in such a way that the hard wear resistant member protects them.

Most preferably the support member is shaped so that the it co-operates with the mould defining member and thus the moulds may be secured in place.

Conveniently the roller comprises a plurality of sections. This has the advantage that rollers can be built up to any desired length and also damaged sections of the roller may be replaced without the need to replace the whole roller.

According to a second aspect of the invention we provide a roller for a biscuit making machine which is constructed in sections. The advantages of this are as discussed hereinbefore.

According to a third aspect of the invention we provide a method of producing a biscuit roller comprising providing a supporting member, and a mould defining member having at least a single mould on an outer surface, such that the supporting member supports the mould defining member.

Such a method provides a biscuit roller which is relatively easy to fabricate.

Preferably the method further comprises a wear resistant member. This member may protect moulds of the mould defining member.

Most preferably the wear resistant member is provided on the support member before the mould defining member. This may facilitate the easy manufacture of the biscuit roller.

The supporting member may be machined before the wear resistant member is provided. This may remove any irregularities and provides a regular surface for the mould defining member.

Holes may be punched, drilled, cut or otherwise provided in the wear resistant member before it is provided on the support member. This may be more convenient than forming the holes after the wear resistant member is provided.

A male die may be inserted into the holes provided in the wear resistant members once it is provided on the supporting member. The mould defining member may be injected into a resulting cavity. This may provide a way of easily providing a female, biscuit shaped mould on the surface of the mould defining member.

The surface of the supporting member may be shaped during the machining so that it offers keys to which the mould defining member may co-operate with. An advantage of this is that the mould defining member may be securely connected to the supporting member.

Alternatively or additionally the supporting member may be shaped during its fabrication so that it offers keys to which the mould defining member may adhere. In this case the machining may improve the keys.

Preferably the keys on the supporting member comprise dove tails. These may offer a strong key.

The method may comprise building the biscuit roller up in sections. This has the advantage that if one part of the biscuit roller is damaged a section of it may be replaced rather than the whole roller.

A further way of looking at the invention is a way of reducing the time and/or cost of repairing a biscuit roller by having it made in sections, preferably adjacent axially spaced sections, so that just one section can be replaced, instead of the whole roller. Thus a common store of spare sections can be used to service many different length/types of roller.

According to a fourth aspect of the invention we provide a biscuit making machine incorporating a roller according to the first aspect of the invention.

An embodiment of the invention will now be described in detail with reference to the accompanying drawings of which:
**Figure 1** is an elevation of a biscuit roller formed from sections according to one aspect of the invention;
**Figure 2** is a side elevation of a section of the roller taken along line A,A of Figure 1;
**Figure 3** is a sectional view through a section of the roller taken along line BB of Figure 2;
**Figure 4** is a net of the surface of the roller of Figure 1; and
**Figure 5** is a schematic representation of arrangement of rollers within one embodiment of a biscuit making machine.

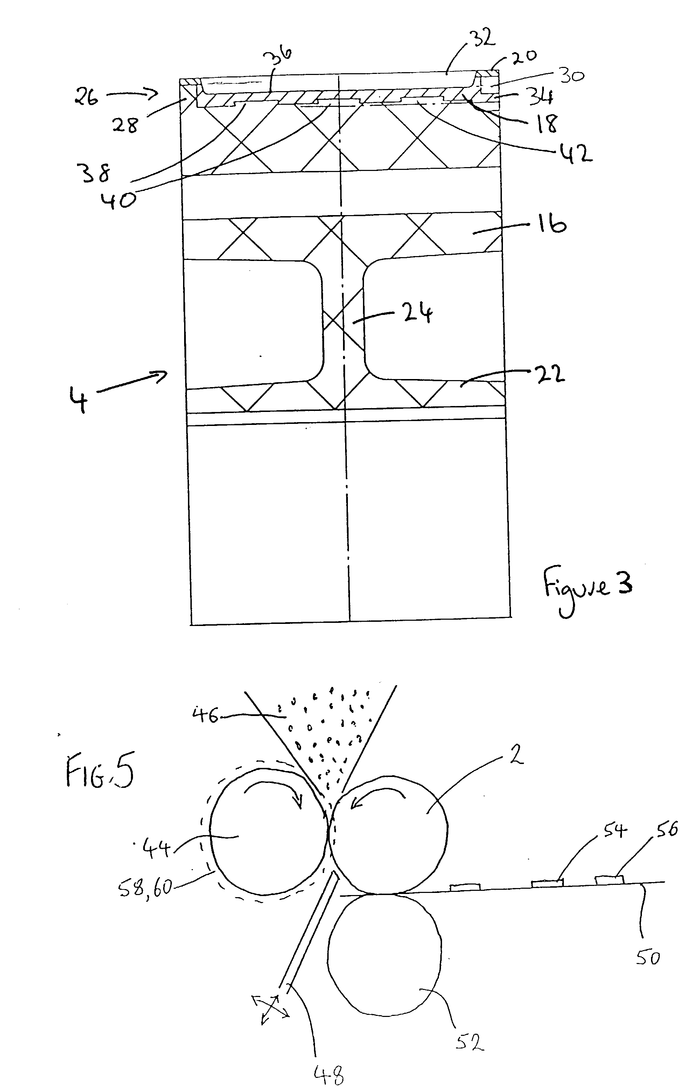

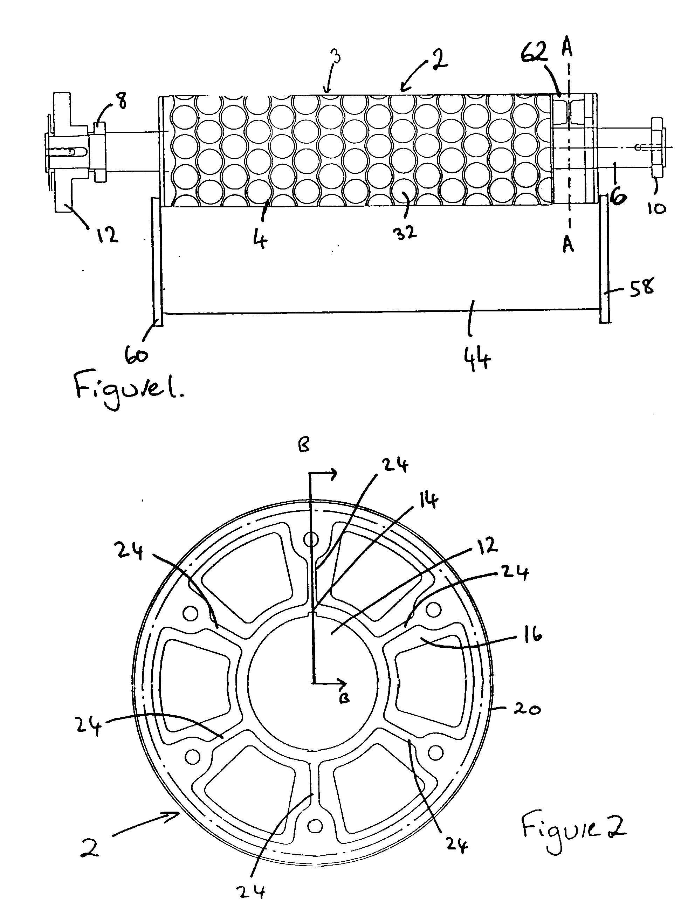

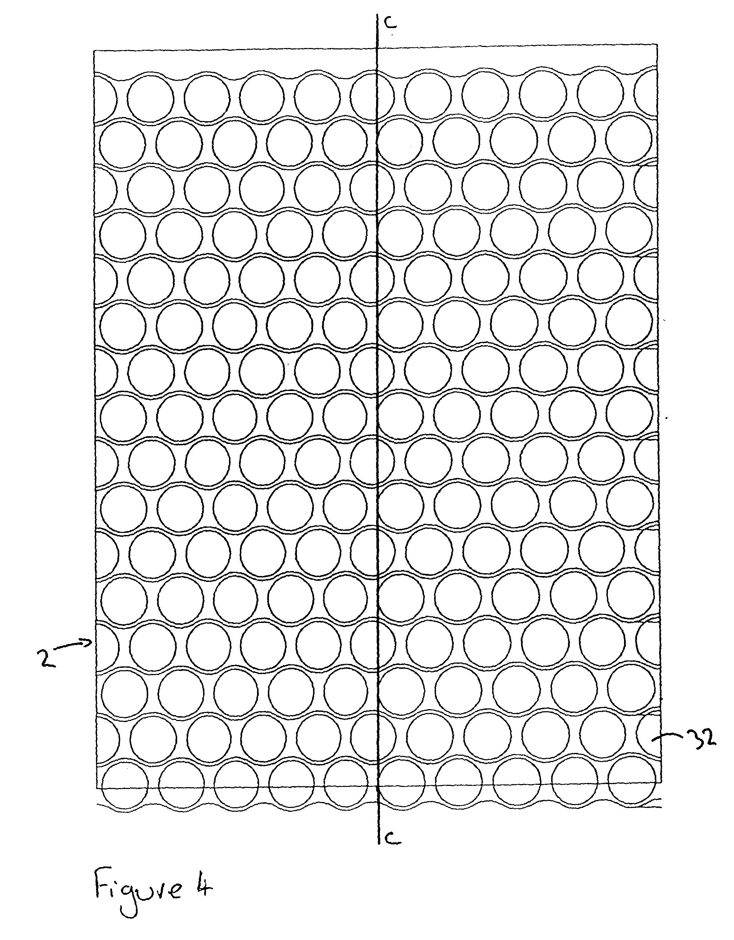

Figures 1 to 5 show a roller 2 of a biscuit making machine

In particular the roller 2 can be seen in Figure 1. The roller 2 comprises a major cylindrical portion 4 and a shaft portion 6. The shaft portion is supported on two bearings 8,10 and has a gear 12 at one end portion.

The roller 2 comprises a number of section, for example as shown at 3,62. An elevation of a section 62 is shown in Figure 2. A hole 12 is provided at a centre portion of the section 62, through which the shaft portion 6 passes. A keyway 14 is provided to prevent the section 62 rotating on the shaft portion 6.

A detailed section through the section 62 can be seen in Figure 3. Three separate portions can be seen: a main body portion (a support member) 16, a mould forming portion (mould defining member) 18, and a surface portion (wear resistant member) 20.

The main body portion 16 forms the majority of the body of the roller 2, and comprises a number of webs 24 (best seen in Figure 2) and flanges 22 in order to reduce the amount of material used. The main body portion 16 is cast from aluminium; this being a material which exhibits good material properties, is lightweight and easy to machine.

The casting of the main body portion 16 forms at an outer circumferential portion 26 two projecting rings 28,30. These rings 28,30 abut the surface portion 20. A duct 34 is formed through the ring 30.

The surface portion 20, comprises a sleeve of stainless steel, offering a relatively hard outer surface which does not corrode and is easy to clean.

The surface portion 20 is fabricated from sheet stainless steel 1.5mm thick. It will be realised that a separate surface position 20 is provided for each section of the roller 2. The edge portions of the surface portion 20 undulate. This formation is desired because it allows a more efficient packing of the moulds around the surface of the roller 2. It will be noted that neighbouring sections co-operate and the surface portions 20 fit next to each other.

Along the outer circumferential portion 26 of the main body portion 16, between the two rings 28,30 are a number of dovetailed projections 38,40,42.

The dovetailed projections 38,40,42 secure the mould forming portion 18 to the main body portion 16.

To form the section 62 the main body portion 16 is cast from Aluminium and machined. A sheet of stainless steel is cut to form a strip with undulating edge portions which will form the surface portion 20. Holes e.g. 32 are then punched into the strip. The sheet is rolled into a ring and welded along a seam. The ring of stainless steel is then shrunk fit onto the aluminium casting. The ring of stainless steel is supported by the two rings 28,30.

Next a male die (not shown) is positioned with each of the holes 32 so that the hole 32 is substantially totally plugged. The outer surface of the die corresponds to the shape of the biscuit mould 36.

Molten plastics material is injected through the duct 34 in the ring 30. The male die, the rings 28,30 and the outer circumferential portion of the main body portion 16 form a mould for the plastics material. The molten plastics material is allowed to cool and the male die is removed.

This process is repeated for each hole around the section 62.

Biscuits must be created to within a few percent accuracy; if too much dough is used then profits will be cut, too little and customers will complain. To achieve this the male die, the main body portion 16 and the surface portion 20 are heated to a known predetermined temperature before the plastics material is injected; this ensures that the cavity is of known dimensions. Preferably this predetermined temperature is the temperature at which the roller will be used, typically, when it is making biscuits.

Once the roller 2 is formed it can be installed in a biscuit making machine. The position of the roller is schematically shown in Figure 5. The roller 2 is shown to be rotating in an anticlockwise direction and is commonly referred to as a moulding roller.

A pressure applying roller 44 abuts the moulding roller 2 and contra-rotates. A web of dough 46 is pulled between the two rollers 2,44.

A knife 48 is provided to scrape excess dough from the moulding roller 2. The knife 48 extends for the entire width of the roller.

A conveyor belt 50 is provided which also abuts the moulding roller 2. A rubber coated roller 52 presses the conveyor belt 50 against the moulding roller 2.

The fat in the biscuit material provided lubrication which assists the extraction of the dough piece from the moulds in the moulding roller. It also, over time, builds up on the belt 50 and helps the biscuits to stick to the belt, and be extracted from the moulds.

In use, the three rollers (the moulding roller 2, the pressure applying roller 44 and the rubber coated roller 52) continuously rotate. The web of dough 46 is drawn between the moulding roller 2 and the pressure applying roller 44. Moulds on the surface of the moulding roller form the web of dough into biscuit shapes.

The knife 48 can be moved in the direction of the arrows in Figure 5 so that differing amounts of pressure can be applied. The knife 48 scrapes excess dough from the moulding roller 2 and abuts the surface portion 20 of the roller. (Since the surface portion is fabricated from a hard wearing material little wear occurs).

The conveyer belt 50 passing between the moulding roller 2 and the rubber coated roller 52 removes the biscuit shapes from the moulding roller 2. The rubber coating on the rubber coated roller 52 provides some play in the surface and provides better removal of the biscuit shapes.

The pressure applying roller 44 is shown as being the same diameter as the moulding roller 2 but this need not be so. At both outer end portions of the pressure applying roller 44 are discs 58,60 of larger diameter than the pressure applying roller 44. These are best seen in Figure 1 but are shown in dashed line in Figure 5.

The discs 58,60 overlap edge portions of moulding roller and ensure that no biscuit dough is squeezed out from between the end portions of the two rollers 2,44. The discs 58,60 are correctly termed cheeks.

The description hereinbefore relates to fabricating a moulding roller 2, which is made in sections. This is perhaps the preferred embodiment. It will be realised that the roller 2 could be fabricated from a single piece; that is the main body portion 16 and the surface portion 20 could be constructed to be the full length of the roller 2.

The various sections for the roller of the preferred embodiment can be seen in the net of Figure 4. The undulating edge portions of the sections can be seen. The edge portions take the form of a repetitive wave passing between the various holes e.g. 32 in the surface portions 20. As noted above the wave pattern ensures that the most efficient packing of the moulds occurs on the surface of the moulding roller 2.

The various sections of the moulding roller can then be passed on to the shaft portion 6 of the roller. The shaft portion 6 is formed as a single piece.

If any of the sections are damaged, the sections are removed from the shaft portion 6, the damaged section replaced and the sections are passed back onto the roller.

To form the net of Figure 4 into the surface of the biscuit roller it must be rolled about the line CC of Figure 4.

It will be appreciated that the plastics material moulds created in the surface of the moulding roller 2 provide a hygienic, low friction means for forming biscuit shapes from the web of dough 46.

The modular construction of the roller reduces the cost of repairing a roller, and the down-time of the overall biscuit making machine.

## Claims

1. A biscuit making roller comprising a support member (16) and a mould-defining member (18), of significant thickness, the mould-defining member (18) being supported by the support member (16) and having an outer surface which has moulds which, in use, form biscuits.

2. A biscuit roller according to claim 1 which further comprises a wear resistant member (20) adapted in use to co-operate with a scraper blade of a biscuit making machine (48).

3. A biscuit roller according to claim 2 in which moulds provided on the outer surface of the mould defining member (18) are provided between the sheet providing the wear resistant member (20) and the support member (16).

4. A biscuit roller according to any preceding claim in which the support member (16) is shaped so that the it co-operates with the mould defining member (18) so as to enable the moulds to be secured in place.

5. A biscuit roller according to any preceding claim in which the roller comprises a plurality of sections.

6. A biscuit roller for a biscuit making machine which is constructed in sections.

7. A method of producing a biscuit roller comprising providing a supporting member (16), and a mould defining member (18) having at least a single mould on an outer surface, such that the supporting member supports the mould defining member (18).

8. A method according to claim 7 comprising providing a wear resistant member (20) on the supporting member (16) before the mould defining member (18) is provided.

9. A method according to claim 8 in which a male die is inserted into holes provided in the wear resistant members (20) once it is provided on the support member (16), and in which the mould-defining member (18) is injected into a resulting cavity.

10. A biscuit making machine incorporating a roller in accordance with any one of claims 1 to 19.
